# EUROPEAN PATENT SPECIFICATION

(11) **EP 0 549 069 B1**
(45) Date of publication and mention of the grant of the patent: **29.12.1997**
(21) Application number: 92204019.1
(22) Date of filing: 18.12.1992
(51) Int. Cl.: H04N 5/14

(54) **Image motion detecting device for an image processing system and the method thereof**
Vorrichtung zur Detektion der Bildbewegung für ein Bildverarbeitungssystem und Verfahren dafür
Dispositif de détection de mouvement d'image pour un système de traitement d'image et méthode associée

(30) Priority: 20.12.1991 KR 9123695
(43) Date of publication of application: 30.06.1993
(73) Proprietor: GOLDSTAR CO. Ltd., Seoul (KR)
(72) Inventor: Hong, Sam Pyo, Kyoungsangbuk-Do (KR)
(74) Representative: Hirsch, Marc-Roger

(56) References cited:
- DE-A- 2 937 284
- US-A- 4 930 012

## Description

### Background of the Invention

The present invention relates to an image motion detecting device for an image processing system and the method thereof, and more particularly to an image motion detecting device and the method thereof which is suitable to detect an image motion generated portion from a video signal using a ROM table.

An image processing system used in a digital TV, or HDTV, etc., detects the temporal variation of a luminance signal level (logic level) separated from an inputted image signal. If the variation is large, it is determined that image variation is severed, so that overall image processing is performed for the whole picture. If the variation is small, it is determined that image is rarely varied, so that partial image processing, which compensates and processes a corresponding variation region in the whole picture, is performed.

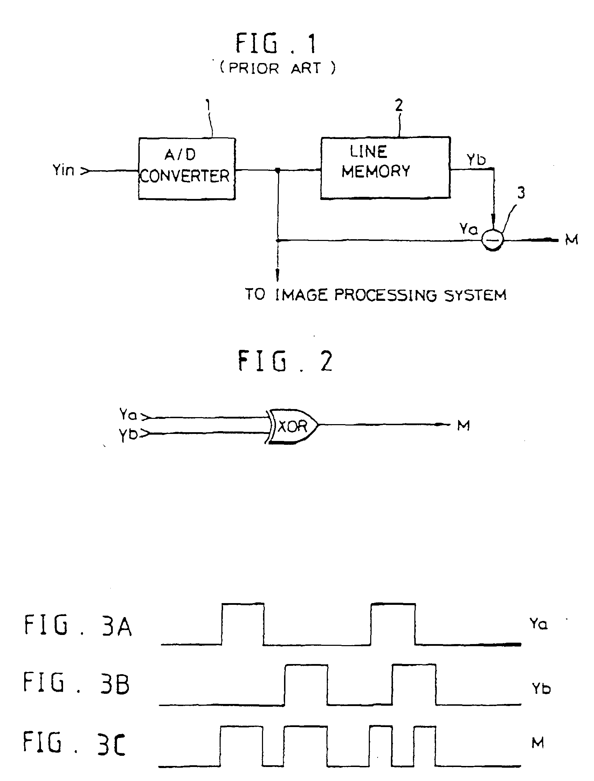

FIG.1 shows a conventional image motion detecting device of an image processing system, which comprises an analog/digital (hereinafter referred to as "A/D") converter 1 for converting an inputted analog luminance signal Yin into a digital signal, a line memory 2 for temporarily storing the luminance signal supplied from the A/D converter 1 line-by-line, and a comparator 3 for comparing a luminance signal Ya of the current line supplied from the A/D converter 1 with a luminance signal Yb of the previous line supplied from the line memory 2, and detecting image motion by the difference. The line memory 2 is generally constructed using a RAM (Random Access Memory), which can be replaced by a field memory or a frame memory for temporarily storing a luminance signal for each field or frame of a picture according to the object of the system, but for convenience of explanation, the use of a line memory is described here as an example.

First of all, a luminance signal Yin is inputted, is quantized through the A/D converter 1, and then is stored in the line memory 2 line by line. After that, a following inputted luminance signal is quantized through the A/D converter 1 and then is supplied to the comparator 3 as a current luminance signal Ya, instead of being stored in the line memory 2.

Accordingly, the comparator 3 compares a one-line delayed, i.e. previous line, luminance signal Yb supplied from the line memory 2 with the current line luminance signal Ya inputted from the A/D converter 1, thereby obtaining the difference, which becomes an image motion detecting signal M.

An exclusive OR gate XOR shown in FIG.2 is an example of means to construct the comparator 3. FIGS.3A to 3C show waveforms of the respective luminance signals Ya and Yb and a motion detecting signal M inputted/outputted through the exclusive OR gate XOR.

The difference between the current line luminance signal Ya outputted in the A/D converter 1, as shown in FIG.3A, and the luminance signal Yb delayed by one line through the line memory 2, as shown in FIG.3B, is obtained in the comparator 3, as shown in FIG.3C.

The number of motion detecting signals obtained as described above (i.e., the number of variations) is inputted to an image processing circuit as a motion detection coefficient, and according to the detection coefficient value, the level of compensation for picture quality is controlled.

That is, if the difference between previously inputted image data and currently inputted image data is large, it is regarded that image variation is severed, and overall processing for the whole picture is performed. If the difference is small, this corresponds to the case rarely having image variation, and the image processing portion partially compensates and processes only the corresponding variation region with respect to the whole picture.

However, the conventional image motion detecting device of an image processing system, even if a previous line luminance signal Yb and a current line luminance signal Ya are identical because of no difference between luminance signals on the respective lines, the previous line luminance signal Yb read out in the line memory Z is delayed by the read-out delay time of the line memory 2, compared with the current line luminance signal Ya. Accordingly, there is the problem of wrongly detecting a motion detecting signal M.

Also, in the construction or comparator 3, a high-speed logic circuit is required because a motion detecting signal should be outputted corresponding to real time processing with respect to the respective input luminance signals Ya and Yb, so that there is the disadvantage of increasing the cost of the motion detecting device.

DE-A-2937284 discloses a motion detection apparatus for digitalised TV signal including a frame memory for delaying input video signal and a substractor for outputting a difference video signal between a current video signal and a delayed video signal. This document suggest to address a second memory with the difference video signal for outputting coefficients according to the amount of the difference between the current and delayed video signals. This apparatus, due to the presence of the substractor, has the same disadvantages.

### Summary of the Invention

It is an object of the present invention to provide an image motion detecting device for an image processing system and the method thereof, which highly stabilizes the process of motion detection and easily realizes embodiment in the hardware of a detecting device, so as to solve the conventional problems.

It is another object of the present invention to provide an image motion detecting device for an image processing system and the method thereof, which can compensate for the analog/digital conversion characteristic of the system and control the sensitivity characteristic of video signal.

To achieve the objects of the present invention, the image motion detecting device for an image processing system comprises the features of claim 1. An examplary device comprises :
an A/D converter for converting an analog luminance signal inputted from a video input device into a digital signal;
first memory means for storing for a predetermined time a digital luminance signal outputted by the A/D converter for a predetermined picture construction unit; and
second memory means for mapping on its table data for producing motion detection coefficients, and reading out the data as motion detection coefficients, using as address signals a digital luminance signal of the predetermined picture construction unit outputted by the A/D converter and the digital luminance delayed for a predetermined time by the first memory means.

Also, an image motion detecting method of an image processing system according to the present invention comprises the steps of claim 5. An examplary process comprises the steps of:
a) converting an analog luminance signal inputted from a video input device into a digital signal;
b) storing for a predetermined time in a first memory the digital luminance signal converted at step "a" for a predetermined picture construction unit;
c) supplying to a second memory as address signals the digital luminance signal converted at step "a" and the digital luminance signal delayed for a predetermined time, being stored in the first memory at step "b", and mapping data on the table of the second memory in the form of compensating for a motion detection coefficient; and
d) producing the motion detection coefficient according to the data mapped on the table at step "c".

### Brief Description of the Drawings

The above objects and other advantages of the present invention will become more apparent by describing the preferred embodiments of the present invention with reference to the attached drawings, in which:
FIG.1 is a block diagram of a conventional image motion detecting device;
FIG.2 shows an embodiment of a comparator shown in FIG.1;
FIGs.3A to 3C and FIGs.4A to 4C are waveforms of motion detecting signals with respect to input luminance signals;
FIG.5 is a block diagram showing an embodiment of a motion detecting device according to the present invention;
FIG.6 is a waveform diagram of a luminance signal inputted from a camera;
FIG.7 is a diagram for explaining a reproduced picture state according to the waveform shown in FIG.6;
FIGs.8A to 8C are waveform diagrams explaining sensitivity compensation of a luminance signal according to the present invention;
FIG.9 is a hypothetical diagram illustrating the sensitivity coefficient table of a second memory EPROM;
FIGs.10A and 10B are graphs illustrating first and second degree sensitivity slopes with respect to input signals, in connection with FIG.9;
FIG.11 is a view explaining address assignment of second memory EPROM with respect to a luminance input signal;
FIG.12 is a hypothetical diagram illustrating data mapping state with respect to address of second memory EPROM;
FIG.13 is a hypothetical diagram illustrating one-dimensional data mapping state of second memory EPROM;
FIG.14 is a diagram showing symmetric state of a luminance signal level with respect to one-dimensional data mapping shown in FIG.13;
FIG.15 is a graph showing sensitivity state according to FIG.14;
FIG.16 is a view explaining the correlation between the amplitude of input luminance signal and the table of second memory EPROM;
FIG.17 illustrates a waveform view of luminance signal inputted from a camera;
FIG.18 is a characteristic view illustrating data mapping state of second memory EPROM with respect to that of FIG.17;
FIGs.19A to 19C are waveform diagrams showing characteristic of quantized luminance signal;
FIGs.20A to 20C are characteristic views illustrating the data mapping state of second memory EPROM with respect to FIGs.19A to 19C;
FIG.21A is a mapping state view illustrating the increase of data values of second memory EPROM with respect to input luminance signal;
FIG.22A is a view illustrating a constant data mapping of second memory EPROM and FIG.22B is a view illustrating on increasing data mapping of second memory EPROM;
FIGs.23A to 23C are views illustrating sensitivity characteristics with respect to luminance signals;
FIGs.24A to 24C are graphs showing coefficient sensing capability (sensitivity) with respect to FIGs.23A to 23C; and
FIGs.25A and 25B are graphs showing quantized characteristic of A/D converter.

### Detailed Description of the Invention

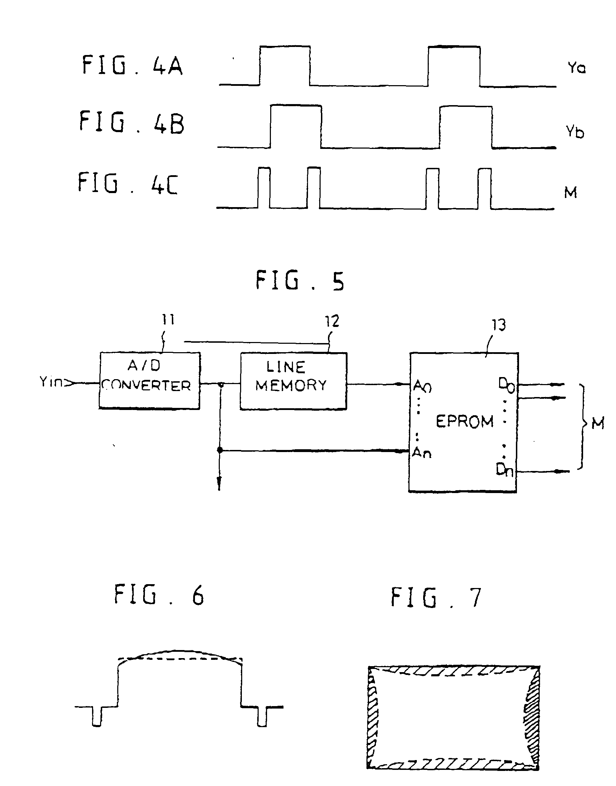

FIG.5 shows an embodiment of a motion detecting device of the present invention, which comprises an A/D converter 11 for converting an analog luminance input signal Yin into a digital signal, a line memory 12 for temporarily storing data on a luminance signal Yb outputted in the A/D converter 11 for a predetermined picture construction unit, i.e., line by line, and an EPROM 13 for outputting data mapped on a table as a motion detection coefficient, using data on a previous line luminance signal Yb outputted in the line memory 12 as a lower address and data on a current line luminance signal Ya outputted in the A/D converter 11 as an upper address. In an embodiment of the present invention, considering a relative coefficient value according to motion detection, an internal data table of EPROM 13 has the form of first to nth degree curve. The characteristic and effect of the present invention constructed as described above is described in detail with reference to FIGs. 6 to 25.

The level of a video signal inputted from a charge coupled device (hereinafter referred to as CCD) camera currently and commonly used has characteristics of several types. That is, due to diffraction characteristic of a CCD camera lens, the luminance level of a picture's central portion is highly outputted, compared with that of the peripheral portions. Accordingly, even if the whole of an object to be photographed has uniform brightness, the brightness shown in the CCD picture is stronger in the central portion than in the peripheral portions. With reference to FIG.6, a luminance signal corresponding to one period in a video signal inputted from a CCD camera does not have an ideal horizontal form like the dotted line of FIG.6, but rather has a curve form with an inflated central portion, and accordingly, the peripheral portion of the picture is slightly more darkly displayed compared with the central portion, as shown in FIG.7.

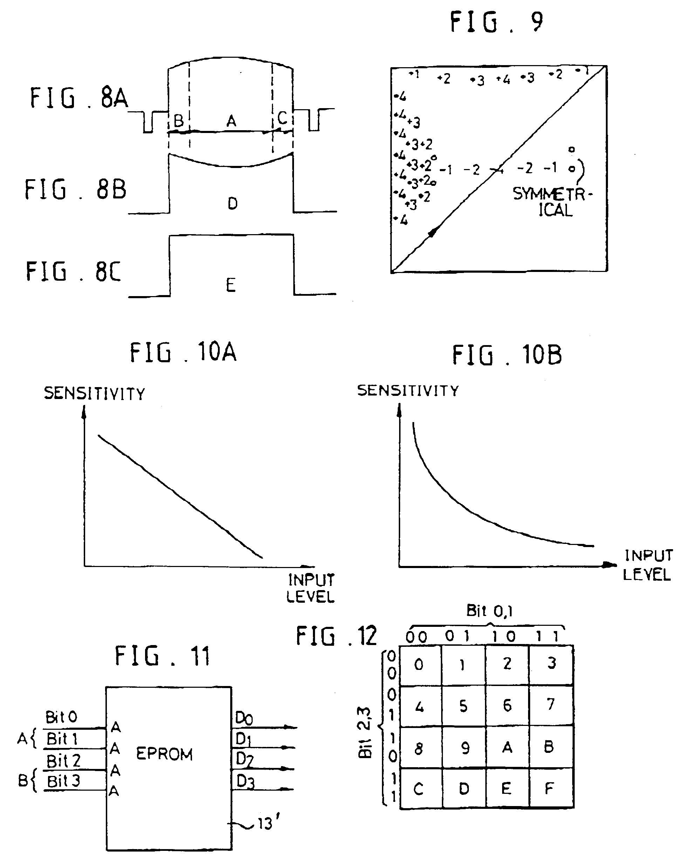

Accordingly, in motion detection, slopes in regions B and C are steeper than those in region A, like the waveform view of a input luminance signal shown in FIG.8A; and accordingly, the sensitivity in regions B and C becomes more susceptible. To compensate for this characteristic, the data table within EPROM 13 is formed to have a compensation curve characteristic such as FIG.8B. That is, the sensitivity of luminance signal is slightly insusceptible in regions B and C, and on the other hand, is slightly susceptible in the central region A, so that, since the characteristic of the input luminance signal is compensated for by this sensitivity characteristic, the actually displayed picture has the overall uniform sensitivity characteristic as shown in FIG.8C.

That is, with respect to image data supplied from the CCD camera, the sensitivity coefficients compensated for in the EPROM 13 can be constructed as in the table shown in FIG.9. In this case, in the sensitivity compensation graph with respect to input signal level, its slope can have a form of first or second degree curve.

For instance, assuming that a current image input signal is A=0100(4) and a previous image input signal at the identical position is B=0011, the conventional motion detecting device simply XOR-gates these values, thereby obtaining the result value 0111, which indicates only that the number of different bits is three.

However, to make the overall determination and control of image motion easy, it should be known how large is the difference between the absolute values of the two signals.

That is, a result having the difference of 0100-0011=0001, i.e., 1 should be obtained.

As the means for obtaining such a difference value, a subtractor can be used. However, in this case, high-speed processing is required and the subtractor also can be wrongly operated with respect to noise input.

Accordingly, according to the present invention, relative coefficient values with respect to detected motion are mapped in the EPROM 13 as internal data, which has the form of first to nth degree curve, thereby obtaining a constant sensitivity characteristic regardless of luminance signal level.

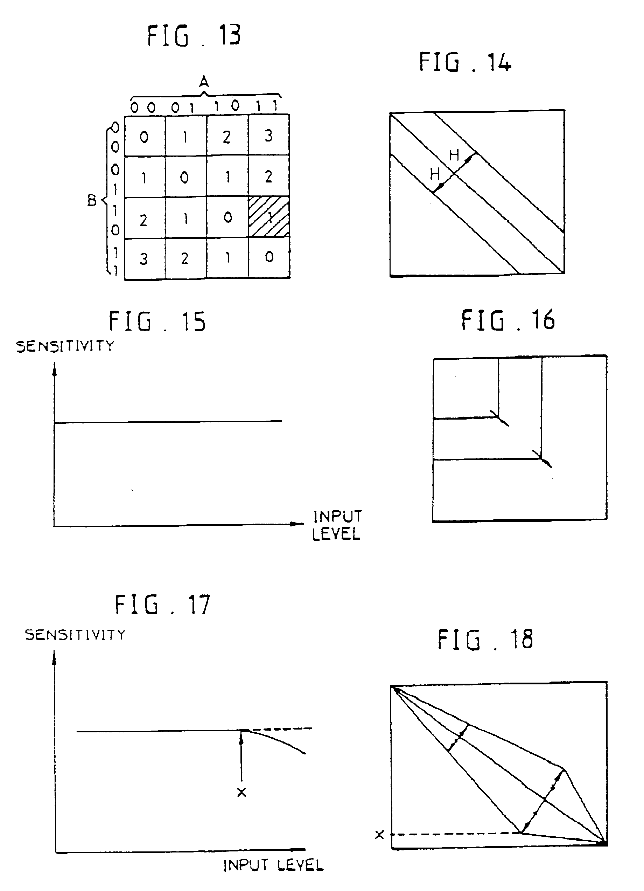

For example, assuming that A is input data of current video signal and B is input data of previous video signal at the identical position, as shown in FIG.11, A is assigned as lower address bits of EPROM 13' and B is assigned as upper address bits of EPROM 13'. In this case, the combination of addresses gives 16 regions as shown in FIG.12, and it should be carefully observed which data will be recorded in each address.

For instance, when data is recorded in one dimension on the inside of EPROM 13' as shown in FIG.13, if A=11(3) and B=10(2) are inputted, data (3-2-1) on the shaded region is selected.

FIG.14 shows the a symmetric state of luminance signal level according to such one-dimensional data mapping, where the sensitivity is constant regardless of the magnitude of luminance signal level as shown in FIG.15.

FIG.16 shows the correlation between the magnitude of input luminance signal level and the EPROM table in the above case.

Meanwhile, as described above, when the sensitivity of the luminance signal obtained through the A/D converter 11 is reduced in a point X such as FIG.17, the input signal level after the point X should be compensated. In this case, the needed data constitution curve of EPROM 13 should be in two dimensions as shown in FIG.18.

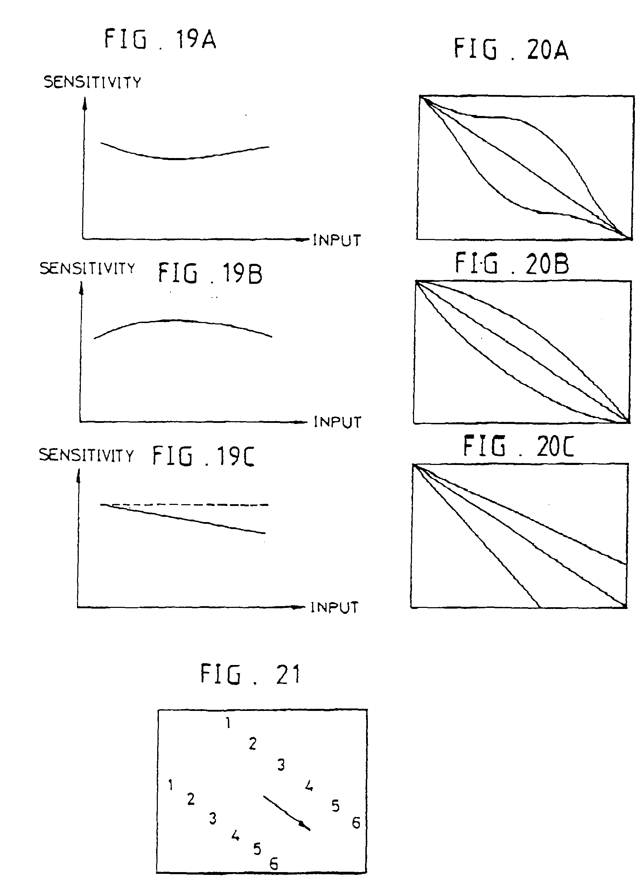

Also, when the characteristics of value obtained by quantizing an input signal are shown in FIGs.19A to 19C, the compensation curves of data of the EPROM 13 for those characteristics should be such as those of FIGs.20A to 20C, respectively.

That is, when the signal value obtained in the A/D converter 11 is reduced as the magnitude of input signal level increases, the data within EPROM 13 should be constituted to have gradually increased values such as FIG.21, to obtain a normal luminance signal. That is, data on a diagonal axis is largely varied according to the magnitude of input signal level, thereby compensating the luminance signal.

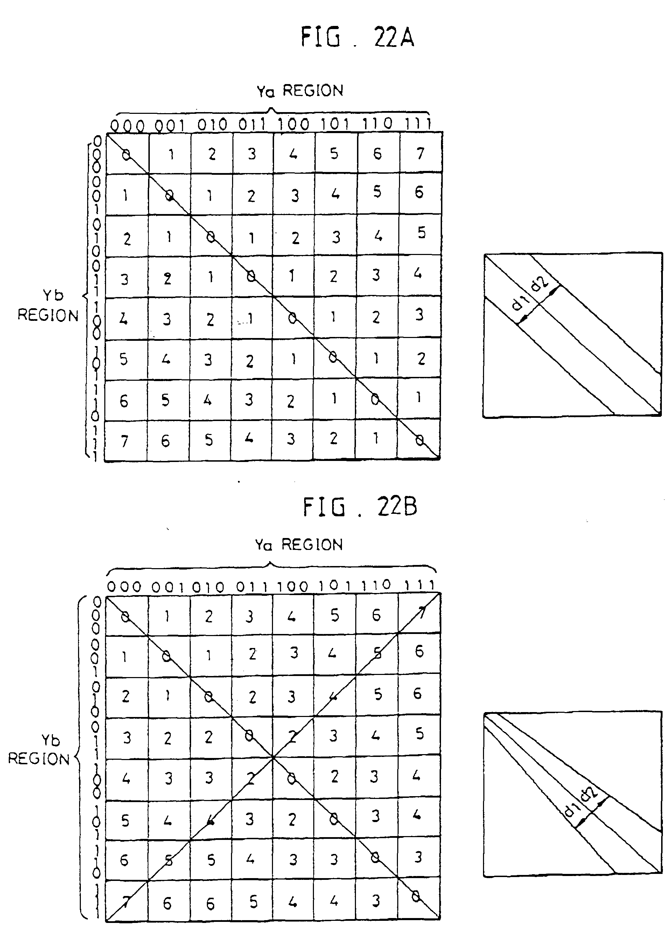

With reference to FIGs.22A and 22B, the above-mentioned embodiment of the present invention is described in more detail.

For instance, when a user constitutes internal data of EPROM 13 as shown in FIG.22A and an input address A2A1A0 with respect to a current input line luminance signal Ya is 001 and an address A5A4A3 with respect to a previous input line luminance signal Yb is 101, data '4' is selected by accessing data, and is the same as the difference of address values, i.e., 101-001-4.

On the contrary, when an input address A2A1A0 with respect to the luminance signal Ya is 101 and an address A5A4A3 with respect to the luminance signal Yb is 001, data '4' is selected by accessing data. Accordingly, it can be known that the EPROM 13 in FIG. 22A performs the same function as the comparator constructed in the conventional motion detecting device.

Meanwhile, when the user constitutes the internal data of EPROM 13 as shown in FIG.22B, an input address A2A1A0 with respect to the luminance signal Ya is 001 and an address A5A4A3 with respect to the luminance signal Yb is 110, data 5 is selected by accessing data. Also, when an input address A2A1A0 with respect to the luminance signal Yya is 110 and an input address A5A4A3 with respect to the luminance signal Yb is 001, data 5 is also selected by accessing data. Accordingly, compared with the case of FIG.22A, it is known that the data are constituted to have gradually increased values.

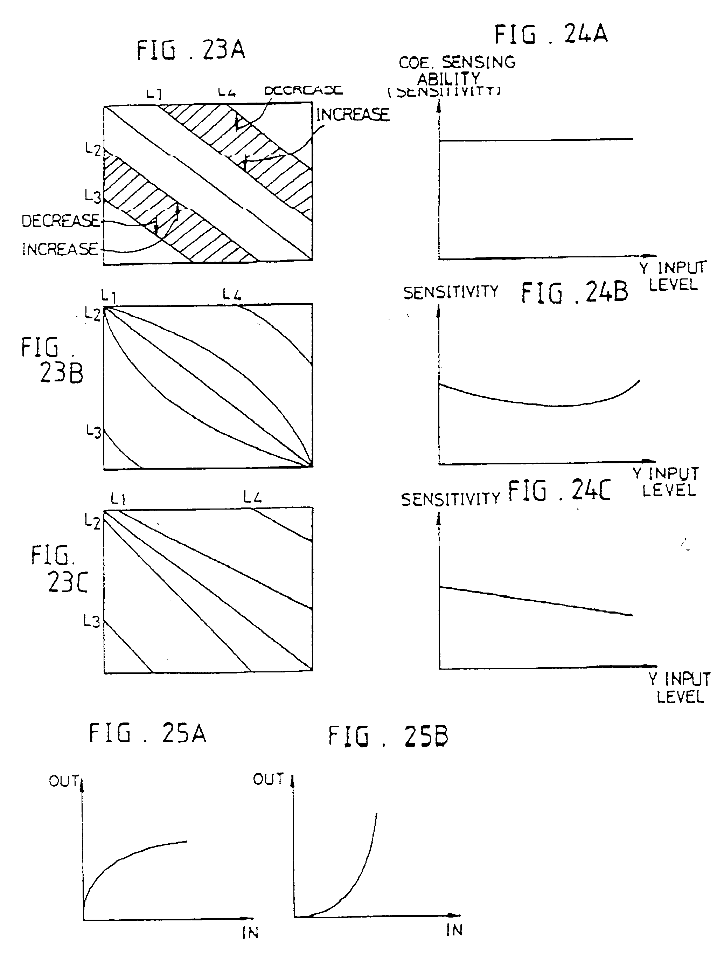

FIGs.23A to 23C show sensitivity characteristics of internal data of EPROM 13 with respect to luminance signal.

As shown in FIG.23A, positions L1 and L2 are in a region having the same sensitivity and positions L3 and L4 are in the same manner. When bit difference of input data is small, access to the region L1 is carried out and when it is large, movement to L4 or L3 occurs.

This characteristic has very important meaning, and if data of EPROM 13 with respect to the magnitude of luminance input level is constituted as shown in FIG.23A, the sensing capability (i.e., sensitivity) of motion detection bit is almost constant, as shown in FIG.24A. Meanwhile, if it is constituted as shown in FIG.23B, coefficient sensing capability in the central portion is weakened as shown in FIG.24B. Accordingly, if EPROM data is applied to the A/D conversion characteristic such as FIG.25A, a constant coefficient sensing output can be obtained. Also, when data of EPROM 13 is constituted as shown in FIG.23C, the coefficient sensing capability becomes that of FIG.24C, which is applied to the A/D conversion characteristic of FIG.25B, thereby also obtaining a constant coefficient sensing output.

As described above, the present invention accesses a nonvolatile memory using as address signals an A/D converted previous luminance signal and a current luminance signal, thereby reading out relative motion detection coefficient. Accordingly, since the error generation due to time delay in the conventional device can be prevented and the sensitivity characteristic can be arbitrarily adjusted according to the A/D conversion characteristic, there are advantages in obtaining a constant luminance signal regardless of the diffraction characteristic of a CCD camera lens, and achieving low-priced construction of a motion detecting device.

## Claims

1. An image motion detecting device for an image processing system, comprising
an analog/digital convertor (11) for converting an analog luminance signal inputted from a video input device into a digital luminance signal;
first memory means (12) for storing for a predetermined time said digital luminance signal and outputting a digital luminance signal delayed for said predetermined time; and
second memory means (13) storing data mapped for producing motion detection coefficients, outputting said data as motion detection coefficients, and using as address signals said digital luminance signal and said delayed digital luminance signal.

2. An image motion detecting device according to claim 1, wherein the data of said second memory means (13) are compensated for sensitivity of said luminance signal.

3. An image motion detecting device according to claim 1 or 2, wherein the first memory means (12) store for a predetermined time said digital luminance signal for one line, one field, or one frame of said video signal.

4. An image motion detecting device according to claim 1, 2 or 3, wherein said second memory means is an EPROM.

5. An image motion detecting method of an image processing system, comprising the steps of:
a) converting an analog luminance signal inputted from a video input device into a digital luminance signal;
b) storing for a predetermined time in a first memory (12) said digital luminance signal, for producing a delayed digital luminance signal;
c) supplying to a second memory (13) as address signals said digital luminance signal and said delayed digital luminance signal, and mapping data on the table of the second memory for motion detection coefficients; and
d) producing the motion detection coefficient according to said mapped data.

6. An image motion detecting method according to claim 5, wherein the data of said second memory means (13) are compensated for sensitivity of said luminance signal.

7. An image motion detecting method according to claim 5 or 6, wherein said digital luminance signal stored for a predetermined time is one line, one field, or one frame of said video signal.

## Patentansprüche

1. Eine Vorrichtung zur Detektion der Bildbewegung für ein Bildverarbeitungssystem, umfassend :
einen Analog-Digital Wandler (11) zum Umwandeln eines von einem Video-Eingangsgerät eingegebenen analogen Leuchtdichtesignals in ein digitales Leuchtdichtesignal;
erste Speichermittel (12) zum Speichern des digitalen Leuchtdichtesignals für eine vorgewählte Zeitspanne und zur Ausgabe des um die vorgewählte Zeitspanne verzögerten digitalen Leuchtdichtesignals; und
zweite Speichermittel (13) zum Speichern von Daten mit einem Layout derart, daß sich Bewegungsdetektionskoeffiziente ergeben;
das Ausgeben dieser Daten in Form von Bewegungsdetektionskoeffizienten und das Verwenden der digitalen Leuchtdichtesignale und der verzögerten Leuchtdichtesignale als Adreßsignale.

2. Die Vorrichtung zur Detektion der Bildbewegung gemäß Anspruch 1, bei der die Daten auf den zweiten Speichermitteln (13) die Empfindlichkeit des Leuchtdichtesignals kompensieren.

3. Die Vorrichtung zur Detektion der Bildbewegung gemäß Anspruch 1 oder 2, bei der die ersten Speichermittel (12) das genannte Leuchtdichtesignal für die vorgewählte Zeitspanne speichern, für eine Linie, ein Teilbild, oder ein Bild des Videosignals.

4. Die Vorrichtung zur Detektion der Bildbewegung gemäß Anspruch 1, 2 oder 3, bei der das zweite Speichermittel ein EPROM ist.

5. Ein Verfahren zur Detektion der Bildbewegung für ein Bildverarbeitungssystem, umfassend die folgenden Schritte :
a) Umwandeln eines von einem Video-Eingangsgerät eingegebenen analogen Leuchtdichtesignals in ein digitales Leuchtdichtesignal;
b) Speichern des digitalen Leuchtdichtesignals für eine vorgewählte Zeitspanne in einem ersten Speicher (12) zur Bereitstellung eines verzögerten digitalen Leuchtdichtesignals;
c) Weiterleiten des digitalen Leuchtdichtesignals und des verzögerten Leuchtdichtesignals in Form eines Adreßsignals zu einem zweiten Speicher (13) und Zuordnung der Daten gemäß dem Layout des zweiten Speichers für die Bildbewegungskoeffizienten;
d) Bereitstellung der Bildbewegungskoeffizienten gemäß dem Datenlayout.

6. Ein Verfahren zur Detektion der Bildbewegung für ein Bildverarbeitungssystem gemäß Anspruch 5, bei dem die Daten der zweiten Speichermittel (13) die Empfindlichkeit des Leuchtdichtesignals kompensieren.

7. Ein Verfahren zur Detektion der Bildbewegung für ein Bildverarbeitungssystem gemäß Anspruch 5 oder 6, bei dem das digitale Leuchtdichtesignal, das für eine vorgewählte Zeitspanne gespeichert wird, eine Linie, ein Teilbild oder ein Bild des Videosignals ist.

## Revendications

1. Un dispositif de détection de mouvement d'image pour un système de traitement d'image, comprenant un convertisseur analogique/numérique (11) pour convertir un signal de luminance analogique d'entrée d'un dispositif d'entrée vidéo en un signal de luminance numérique:
des premier moyens de mémoire (12) pour mettre en mémoire pendant une durée prédéterminée ledit signal numérique de luminance, et pour émettre en sortie un signal numérique de luminance retardé de ladite durée prédéterminée; et
des deuxièmes moyens de mémoire (13) pour mettre en mémoire des données mises en correspondance pour produire des coefficients de détection de mouvement, pour émettre en sortie lesdites données comme coefficients de mesure de mouvement, et utilisant comme signaux d'adresse ledit signal numérique de luminance et ledit signal numérique de luminance retardé.

2. Un dispositif de détection de mouvement d'image selon la revendication dans lequel les données desdits deuxièmes moyens de mémoire (13) sont compensés en sensibilité dudit signal de luminance.

3. Un dispositif de détection de mouvement d'image selon la revendication 1, dans lequel les premiers moyens de mémoire (12) mettent en mémoire pendant une durée prédéterminée ledit signal numérique de luminance pour une ligne une trame ou une image dudit signal vidéo.

4. Un dispositif de détection de mouvement d'image selon la revendication 1, dans lequel lesdits deuxièmes moyens de mémoire sont constitués d'une mémoire EPROM.

5. Un procédé de détection de mouvement de l'image selon la revendication comprenant les étapes consistant:
a) à convertir un signal analogique de luminance d'entrée à partir d'un dispositif d'entrée vidéo en un signal numérique de luminance:
b) à mettre dans une première mémoire (12) pendant une durée prédéterminées ledit signal numérique de luminance, pour produire un signal numérique de luminance retardé:
c) à transmettre à une deuxième mémoire (13), comme signaux d'adresse, ledit signal numérique de luminance et ledit signal numérique de luminance retardé, et à les mettre en correspondance avec les données sur le tableau de la deuxième mémoire, pour les coefficients de mesure de mouvement; et
d) à produire le coefficient de mesure de mouvement en fonction desdites données mises en carte.

6. Un procédé de mesure de mouvement de l'image selon la revendication 1, dans lequel les données desdits deuxièmes moyens de mémoire (13) sont compensées en sensibilité dudit signal de luminance.

7. Un procédé de mesure de mouvement d'image selon la revendication 5 ou 6, dans lequel ledit signal numérique de luminance mis en mémoire pendant une durée prédéterminée est constitué par une ligne, une trame, ou une image dudit signal vidéo.
